(19) Europäisches Patentamt
European Patent Office
Office européen des brevets

(11) Publication number: **0 517 167 A2**

# (12) EUROPEAN PATENT APPLICATION

(21) Application number: **92109305.0**

(51) Int. Cl.[5]: **C08G 65/32**, C09J 163/00

(22) Date of filing: **02.06.92**

(30) Priority: **04.06.91 US 710269**

(43) Date of publication of application:
**09.12.92 Bulletin 92/50**

(84) Designated Contracting States:
**DE FR GB IT**

(71) Applicant: **National Starch and Chemical Investment Holding Corporation**
**501 Silverside Road**
**Wilmington, Delaware 19809(US)**

(72) Inventor: **Chen, Shuh-Chung**
**11 Adams Drive**
**Belle Mead, New Jersey 08502(US)**
Inventor: **Schoenberg, Jules**
**2079 Lyde Place**
**Scotch Plains, New Jersey 07076(US)**

(74) Representative: **Hagemann, Heinrich, Dr. Dipl.-Chem. et al**
**Patentanwälte HAGEMANN & KEHL**
**Ismaninger Strasse 108 Postfach 860329**
**W-8000 München 86(DE)**

## (54) Flexible polyetheramines useful in epoxy compositions.

(57) Novel polyetheramine compounds, useful as curing agents in epoxy adhesive compositions, having the structure:

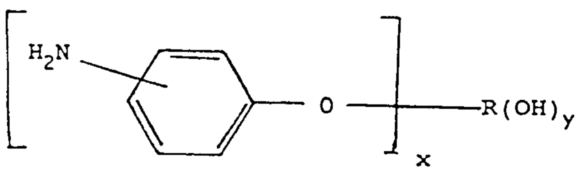

where x is 1 to 4, y is 0 to 3 and R is the organic residue of a polyol having one of the formulas:

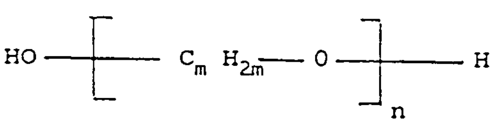

(I)

where m is 2 to 12 and n represents a number of repeating units so as to provide a polyol having a number average molecular weight of about 400 to 12,000, or

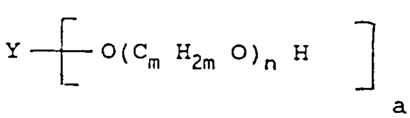

(II)

where Y is a divalent, trivalent or tetravalent organic radical with a valence (functionality) equal to a, a is 2 to 4,

EP 0 517 167 A2

m is 2 to 12 and n represents a number of repeating units so as to provide a polyol having a number average molecular weight of about 400 to 12,000.

In another embodiment, the polyetheramine compound is used as a curing agent for a polyepoxide compound to provide an epoxy adhesive composition having improved toughness properties.

## BACKGROUND OF THE INVENTION

This invention relates to novel polyetheramine compounds and their use as curing agents in epoxy adhesive compositions to provide an epoxy system having particularly advantageous toughness properties.

Epoxies have gained wide acceptance for their use as adhesives because of the variety of desirable properties they possess, including excellent tensile and shear strengths as well as high compressive and flexural characteristics, excellent cohesive strength and chemical resistance and good elevated temperature capabilities. Additionally, epoxies do not evolve any volatile component on curing and essentially no shrinkage occurs during polymerization. The various properties possessed by epoxy resins, as well as the ability to change or modify these properties through formulation additives, make them very versatile and useful in a number of adhesive applications. However, one attribute that has been found lacking in epoxy adhesives has been in the area of toughness where they exhibit relatively low peel strengths.

Various compounds have been used as curing agents for epoxy resins, including both catalytic and coreactive types. The catalytic type include Lewis acids or bases such as the tertiary amines. The coreactive curing agents include polyamines, polyamino amides, polyphenols, polymeric thiols, polycarboxylic acids and cyclic anhydrides. Typical curing agents may be found in "Handbook of Thermoset Plastics" edited by Sidney H. Goodman, Noyes publications, pp. 141 - 157, 1986.

U.S. Pat. No. 4,692,272 discloses a thermally stable adhesive comprising a soluble polyimide resin, an epoxy resin and a conventional hardener or curing agent for the epoxy resin including aliphatic polyamines, amidoamines, polyamides and aromatic amines.

U.S. Pat. No. 4,328,322 discloses the use of flexible diamine ester compounds as curing agents for polyurethanes. One disadvantage of this type of compound is the ester linkages are hydrolytically unstable.

U.S. Pat. No. 4,312,974 discloses epoxy resin systems containing polyepoxides and amine salts prepared from piperazine and polycarboxylic acids as curing agents.

U.S. Pat. No. 4,268,656 discloses epoxy resin systems containing known curing agents such as dicyandiamide, a carboxylic acid anhydride, or a dihydrazide and a co-curing agent which is prepared by reacting a polyepoxide with N-substituted piperazine or N-substituted homopiperazine.

U.S. Pat. No. 3,645,969 discloses curable polyepoxide compositions containing a mixture of a polyglycol polyamine and an alkylene polyamine as a curing agent.

While the known class of epoxy resins and the different formulations for such resins has provided great versatility in their application, the need exists for an epoxy adhesive which will provide better toughness properties.

## SUMMARY OF THE INVENTION

The present invention provides polyetheramine compounds which are especially useful as curing agents in epoxy resins to provide an epoxy composition having improved toughness and flexibility properties.

More particularly, this invention is directed to polyetheramine compounds of the formula:

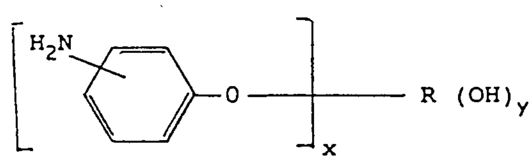

where x is 1 to 4, y is 0 to 3 and R is the organic residue of a polyol having one of the formulas:

$$HO-\left[C_m H_{2m}-O\right]_n-H \qquad (I)$$

where m is 2 to 12 and n represents a number of repeating units so as to provide a polyol having a number average molecular weight of about 400 to 12,000, or

$$Y-\left[O(C_m H_{2m} O)_n H\right]_a \qquad (II)$$

where Y is a divalent, trivalent or tetravalent organic radical with a valence (functionality) equal to a, a is 2 to 4, m is 2 to 12 and n represents a number of repeating units so as to provide a polyol having a number average molecular weight of about 400 to 12,000.

Another embodiment of this invention is directed to an epoxy adhesive composition having improved toughness comprising a polyepoxide compound and from about 5 to about 80 parts per hundred parts epoxy compound (epoxy resin) of a polyetheramine compound of the formula:

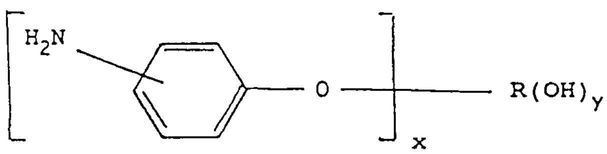

where x is 1 to 4, y is 0 to 3 and R is the organic residue of a polyol having one of the formulas:

$$HO-\left[C_m H_{2m}-O\right]_n-H \qquad (I)$$

where m is 2 to 12 and n represents a number of repeating units so as to provide a polyol having a number average molecular weight of from about 400 to 12,000, or

$$Y-\left[O(C_m H_{2m} O)_n H\right]_a \qquad (II)$$

where Y is a divalent, trivalent or tetravalent organic radical with a valence (functionality) equal to a, a is 2 to 4, m is 2 to 12 and n represents a number of repeating units so as to provide a polyol having a number average molecular weight of about 400 to 12,000.

DETAILED DESCRIPTION OF THE INVENTION

The polyetheramines of this invention are prepared by reacting selected polyols with fluorine substituted nitrobenzenes followed by reduction of the nitro groups. A typical example is the reaction of 1-fluoro-4-nitrobenzene with poly (tetramethylene glycol) in the presence of cesium carbonate as a base or acid scavenger followed by the catalytic hydrogenation of nitro groups as shown in the following equation:

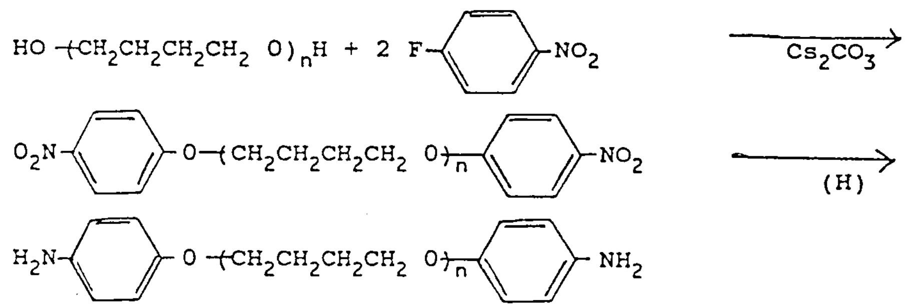


The polyols used in obtaining the desired polyetheramines may be selected from any of the well known glycol or polyhydric alcohols. More particularly, the polyols will be selected from those having one of the following general formulas:

$$HO - \left[ C_m H_{2m} - O \right]_n - H \qquad (I)$$

where m is 2 to 12 and n represents a number of repeating units so as to provide a polyol having a number average molecular weight of about 400 to 12,000, or

$$Y - \left[ O(C_m H_{2m} O)_n H \right]_a \qquad (II)$$

where Y is a divalent, trivalent or tetravalent organic radical with a valence (functionality) equal to a, a is 2 to 4, m is 2 to 12 and n represents a number of repeating units so as to provide a polyol having a number average molecular weight of about 400 to 12,000.

In the above formulas the $C_m H_{2m}$ groups are divalent linear or branched alkylene or hydrocarbon groups, i.e., Formulas I and II include polyols such as polypropylene glycol that can contain e.g., either or both the 1,2-propylene glycol and 1,3-propylene glycol structures therein. These polyols of Formulas I and II can be made by polymerizing alkylene oxides such as ethylene oxide, propylene oxide and tetramethylene oxide (tetrahydrofuran) either alone or in the presence of selected polyols or polyhydric alcohols which contain an organic radical or group Y. The Y radical as found in the polyols of Formula II, is divalent, trivalent or tetravalent and is the organic residue exclusive of hydroxyl groups or remaining after removal of the hydroxyl groups of a selected diol, triol or tetrahydric alcohol. Polyols or polyhydric alcohols of the type found in Formula II and providing the organic radical Y include pentaerythritol, glycerol, neopentyl glycol, trimethylolethane, trimethylolpropane and cyclohexane dimethanol. The polyols of Formulas I and II also may include random or graft copolymers within the structures as defined. It is further noted that if the hydroxyl groups of the polyvalent polyols used in preparing the polyols of Formula II have unequal activity, such as glycerol, then the different n values for the individual chains could be different and may be low in number or even zero as long as the polyol satisfies the molecular weight parameter. Especially preferred polyols are those of Formula I where x is 1 or 2, y is 0 or 1, and m is 2 to 4, for example, polyethylene glycol, polypropylene glycol and poly (tetramethylene) glycol and having a number average molecular weight of from about 600 to 10,000 and more preferably from about 800 to 4,000.

In preparing the polyetheramines of this invention, cesium carbonate and potassium carbonate combined with 18-crown-6 have been found to be effective bases in reacting the polyol with the fluorine substituted nitrobenzene. The reduction of the nitro groups may be carried out by the well known technique of catalytic hydrogenation using, for example, palladium on activated carbon as the catalyst, or by chemical reduction.

The above defined polyetheramines may be used as curing agents for epoxies, polyurethanes and

polyureas.

An epoxy adhesive composition using the hereinabove disclosed polyetheramines represents another embodiment of this invention. This epoxy composition has especially improved toughness properties while retaining the other necessary properties of an adhesive. Generally, this composition comprises a polyepoxide compound and from about 5 to 80 parts per hundred parts of epoxy compound (epoxy resin) of a polyetheramine compound of the formula:

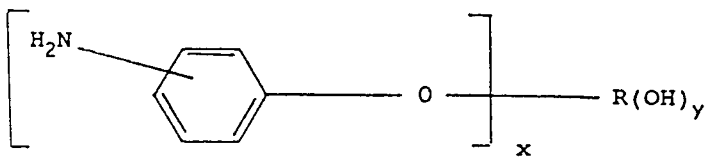

where x is 1 to 4, y is 0 to 3 and R is the organic residue of a polyol having one of the formulas:

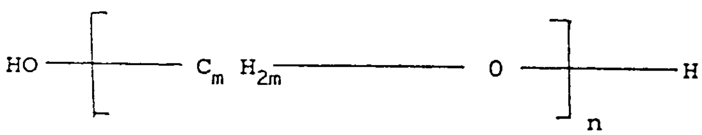

(I)

where m is 2 to 12 and n represents a number of repeating units so as to provide a polyol having a number average molecular weight of from about 400 to 12,000, or

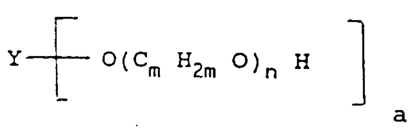

(II)

where Y is a divalent, trivalent or tetravalent organic radical with a valence (functionality) equal to a, a is 2 to 4, m is 2 to 12 and n represents a number of repeating units so as to provide a polyol having a number average molecular weight of about 400 to 12,000. Preferably the polyols I and II will have an m of 2 to 4 and a number average molecule weight of about 600 to 10,000, more preferably from about 800 to 4,000. The preferred epoxy adhesive composition in accordance with this invention are those wherein the polyol of Formula I is used in preparing the polyetheramines.

The polyepoxide compound or epoxy resin component of the epoxy adhesive composition is a conventional crosslinkable polyfunctional epoxy resin. The polyepoxides which are useful in this invention will typically contain more than one 1,2-epoxy group per molecule and such group can be terminally or internally situated on the molecule. They may be substituted or unsubstituted, aliphatic, cycloaliphatic, aromatic or heterocyclic. Mixtures of polyepoxides are also suitable.

Polyepoxides which are particularly useful are the glycidyl ethers of polyhydric phenols which are derived from an epihalohydrin, e.g., epichlorohydrin, with a polyhydric phenol. Examples of such polyhydric phenols include bisphenol A, i.e., 2,2-bis (4-hydroxyphenyl) propane, resorcinol, hydroquinone, 4,4'-dihydroxybenzophenone, 1,1-bis (4-hydroxyphenyl) ethane, 1,1-bis (4-hydroxyphenyl) isobutane, 2,2-bis (4-hydroxyphenyl) butane, phloroglucinol and bis (4-hydroxyphenyl) sulfone. Additional polyhydric phenols are novolak resins containing two or more phenols, or substituted phenol moieties linked through methylene bridges, as well as halogenated, e.g., brominated and chlorinated, phenolic compounds.

Additional epoxy resins are glycidyl ethers of polyhydric alcohols prepared by reacting a polyhydric alcohol with an epihalohydrin using a Lewis acid catalyst, e.g., boron trifluoride, and subsequently treating the resulting product with an alkaline dehalogenating agent. Included in such polyhydric alcohols are glycerine, ethylene glycol, propylene glycol, diethylene glycol, hexanediol, hexanetriol, trimethylolpropane, trimethylolethane and pentaerythritol.

Other useful epoxy resins are glycidyl esters of polycarboxylic acids which are derived from an

epihalohydrin and polycarboxylic acid. Examples of such acids include phthalic acid, isophthalic acid, terephthalic acid, tetrahydrophthalic acid, hexahydrophthalic anhydride, adipic acid, dimerized fatty acids, dibasic acids made from an unsaturated fatty acid and acrylic acid.

The most preferred epoxy resins are glycidyl polyethers of polyhydric phenols, particularly the diglycidyl ether of bisphenol A and glycidyl ethers of phenol or cresol novolak resins.

The above is a partial list of the polyepoxide or epoxy resins which may be used, and others known in the art may also be used including those noted in "Handbook of Thermoset Plastics" edited by Sidney H. Goodman, pp. 132 - 141, 1986, and U.S. Pat. Nos. 4,608,404 and 4,692,272.

The epoxy adhesive composition of this invention contains a polyepoxide and a polyetheramine compound as described above. The polyetheramine compound is a coreactive curing agent for the epoxy resin and generally the total of curing and coreactive curing agents is used in stoichiometric quantities with such resin. More particularly, the amount of polyetheramine compound in the epoxy adhesive composition will be from about 5 to 80 parts per hundred parts of epoxy compound (epoxy resin) and preferably from about 10 to 60 parts. Various additive and modifying materials and other curing agents may be included in the epoxy resin system of this invention. These include fillers, reinforcements, colorants, viscosity modifiers, diluents, flexibilizers and plasticizers.

Fillers are used to modify the density, electrical and thermal conductivity, reduce shrinkage, improve heat resistance, alter surface hardness and improve adhesive properties. The fillers may be organic or inorganic, metallic or nonmetallic. Some of the commonly used fillers are carbon black; metal powders such as aluminum, copper, silver, gold and iron; metal oxides such as silica, titania and alumina; clays such as kaolin; silicates such as magnesium or aluminum silicate; asbestos; and phenolic resins.

Reinforcement additives are used to increase tensile, compressive, flexural and impact strength, to improve heat resistance, and to reduce shrinkage and thermal expansion. They are fibers in the form of cloth, mat, or chopped strands, such as glass, metal, carbon and nylon.

Colorants such as inorganic pigments or organic dyestuffs are added to change the color for esthetic or identification purposes. These include titanium dioxide, carbon black, National Fast Red or Bismarck Brown.

Viscosity modifiers are added to improve the handling characteristics of the system. They include thixotropic agents such as silica, polybutadienes, butadiene-acrylonitrile copolymers and styrene-butadiene copolymers and diluents such as toluene, xylene and dibutyl phthalate and reactive diluents such as mono- and di-epoxides (e.g., butyl, hexyl, phenyl, p-xylyl and/or p-hexyl phenyl glycidyl ethers).

The following examples serve to illustrate further the embodiments of the invention and are not intended to be construed as limitations thereof. In the examples all parts and percentages are given by weight and all temperatures in degrees Celsius unless otherwise noted.

The following test procedures were employed in the examples below:

Determination of Peel Strength and Tensile Shear Strength

These strength properties in the adhesive were determined according to the ASTM Standard Method of Test Designations D 1876-72 for the peel strength and D 1000-72 for the tensile shear strength.

Example I

This example describes the preparation of poly (tetramethylene glycol) bis (4-aminophenyl) ether, one of the polyetheramine compounds of this invention.

A 4-neck round bottom flask equipped with a mechanical stirrer, thermometer, reflux condenser and nitrogen inlet was charged with 195.0 g of poly (tetramethylene glycol) marketed by DuPont as Terathane™ 1000, 84.0 g of 1-fluoro-4-nitrobenzene and 65.2 g of cesium carbonate. The reaction mixture was heated to reflux for 24 hours. After cooling to room temperature, 800 ml. of toluene was added and the solution filtered. The filtrate was washed with water three times, dried over magnesium sulfate and filtered again.

The toluene solution obtained above was charged with 15 g of palladium on activated carbon (5% palladium content). The mixture was sealed in a pressure reactor and charged with 400 psi of hydrogen. A mild exotherm was observed and the system maintained at 400 psi until the exotherm was over and the theoretical amount of hydrogen gas was consumed. The product mixture was filtered and solvent removed by distillation. The yield of amber resin was 169 g (73%) and this product had an amine equivalent weight of 665. This product being derived from Terathane 1000 (MW = 1000) was designated as modifier 1000 or M-1000.

Example II

The poly (tetramethylene glycol) bis (4-aminophenyl) ether of Example I, i.e., M-1000 was formulated into an epoxy system using a diglycidyl ether marketed by Shell Chemical Company under the name Epon 828. This is a diglycidyl ether obtained by reacting epichlorohydrin with bisphenol A and having an epoxide equivalent weight of 185-192. A co-curing agent, i.e., 4,4'-diaminodiphenyl sulfone, was also included in the system so that the total number of NH groups was about equal to the number of epoxy groups. The amount of polyetheramine from Example I in the epoxy system is shown in Table 1 as parts per hundred parts of epoxy resin. For comparison purposes there were two controls. Control 1 is the neat epoxy resin without modification and Control 2 is the formulation of Epon 828 and 40 parts of triethyleneglycol bis (4-aminophenyl) ether per hundred parts of epoxy resin. The peel and tensile shear strengths were determined using an Instron Tensile Tester and the results shown in Table I.

Table 1

| Sample | Level of Modification*(a) | Peel Strength(b) | Tensile Shear Strength(c) |
|---|---|---|---|
| Control 1 | (none) | 1 pli | 4200 psi |
| Control 2 | 40 phr (d) | 1 pli | 4507 psi |
| A | 50 phr (M-1000) | 10 pli | 4333 psi |
| B | 40 phr (M-1000) | 9 pli | 4280 psi |
| C | 20 phr (M-1000) | 5 pli | 4547 psi |

* (polyetheramine modifier type)
(a) phr is parts per hundred parts of epoxy resin
(b) pli is pounds per linear inch
(c) psi is pounds per square inch
(d) polyetheramine derived from triethylene glycol (MW = 150)

The results show that without any additive, Control 1, or by adding a polyetheramine derived from triethylene glycol (MW = 150) as shown in Control 2, the resulting formulation exhibited rather poor toughness properties as evidenced by the peel strength of 1 pli. In contrast, the epoxy formulations using a representative polyetheramine of this invention at varying concentration levels, A, B and C, demonstrated appreciable improvement in the peel strength of 10, 9 and 5 pli while substantially retaining the tensile shear strength.

Example III

Using the same procedure as described in Example I, two additional polyetheramine modifier compounds of different molecular weight were prepared from Terathane 650 (MW = 650) and Terathane 2000 (MW = 2000). They were designated M-650 and M-2000 respectively.

Example IV

The polyetheramine modifier compounds of Example III i.e., M-650 and M-2000 were formulated into an epoxy system as in Example II using a diglycidyl polyether Epon 828 (Shell) and a co-curing agent i.e., 4,4'- diaminodiphenyl sulfone. The amount of polyetheramine modifier compounds from Example III used in the epoxy system is shown in Table 2 as phr, i.e., parts per hundred parts of epoxy resin.

Table 2

| Sample | Level of Modification* | Strength |
|---|---|---|
| D | 40 phr (M-650) | 3 pli |
| E | 30 phr (M-650) | 3.3 pli |
| F | 20 phr (M-650) | 2 pli |
| G | 10 phr (M-650) | 1 pli |
| H | 40 phr (M-2000) | 9.8 pli |
| I | 30 phr (M-2000) | 10 pli |
| J | 20 phr (M-2000) | 4.7 pli |
| K | 10 phr (M-2000) | 1.0 pli |

* (Polyetheramine modifier type)

The results show that both polyetheramine modifiers have improved the toughness of the expoxy system as evidenced by the improved peel strength. The higher molecular weight modifier i.e., M-2000 performed better than the lower molecular weight version, i.e., M-650.

Example V

This example demonstrated that the polyetheramine modifiers flexiblized the epoxy system as indicated by the Shore D hardness:

| Sample | Level of Modification* | Shore D Hardness |
|---|---|---|
| Control | - none - | 84 |
| B | 40 phr (M-1000) | 75 |
| c | 20 phr (M-1000) | 82 |
| D | 40 phr (M-650) | 79 |
| E | 30 phr (M-650) | 82 |
| F | 20 phr (M-650) | 82 |
| G | 10 phr (M-650) | 83 |
| H | 40 phr (M-2000) | 81 |
| I | 30 phr (M-2000) | 82 |
| J | 20 phr (M-2000) | 83 |
| K | 10 phr (M-2000) | 83 |

* (Polyethermine modifier type)

The samples were cured at 175°C for 2 hours and the hardness was measured by a Shore Durometer Type D.

**Claims**

**1.** A polyetheramine compound of the formula:

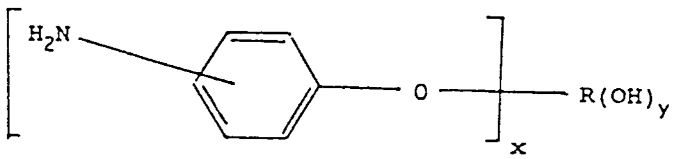

where x is 1 to 4, y is 0 to 3 and R is the organic residue of a polyol having one of the formulas:

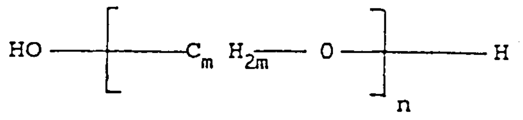

(I)

where m is 2 to 12 and n represents a number of repeating units so as to provide a polyol having a number average molecular weight of about 400 to 12,000, or

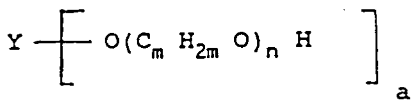

(II)

where Y is a divalent, trivalent or tetravalent organic radical with a valence equal to a, a is 2 to 4, m is 2 to 12 and n represents a number of repeating units so as to provide a polyol having a number average molecular weight of about 400 to 12,000.

**2.** The compound of Claim 1 where the polyol has a number average molecular weight of from about 600 to 10,000.

**3.** The compound of Claim 1 where R is the organic residue of a polyol of Formula (I), x is 1 or 2, y is 0 or 1 and wherein the polyol has a number average molecular weight of from about 600 to 10,000.

**4.** The compound of Claim 3 wherein m is 2 to 4, x is 2, y is 0 and wherein the polyol has a number average molecular weight of about 800 to 4,000.

**5.** An epoxy adhesive composition having improved toughness comprising a polyepoxide compound and from about 5 to about 80 parts per hundred parts of epoxy compound of a polyetheramine compound of the formula:

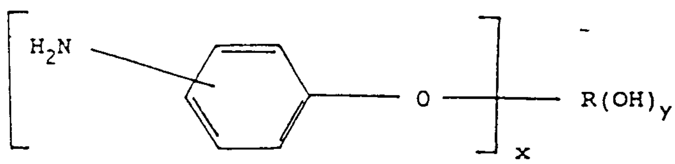

where x is 1 to 4, y is 0 to 3 and R is the organic residue of a polyol having one of the formulas:

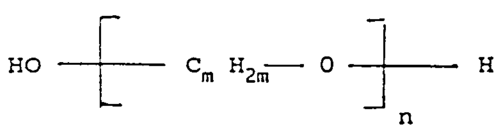

(I)

where m is 2 to 12 and n represents a number of repeating units so as to provide a polyol having a number average molecular weight of about 400 to 12,000, or

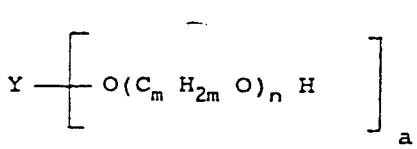

(II)

where Y is a divalent, trivalent or tetravalent organic radical with a valence equal to a, a is 2 to 4, m is 2

to 12 and n represents a number of repeating units so as to provide a polyol having a number average molecular weight of about 400 to 12,000.

**6.** The composition of Claim 5 wherein the polyol has a number average molecular weight of from about 600 to 10,000.

**7.** The composition of Claim 6 wherein m is 2 to 4, R is the organic residue of a polyol of Formula (I), x is 1 or 2 and y is 0 or 1.

**8.** The composition of Claim 7 wherein the polyol has a number average molecular weight of from about 800 to 4,000.

**9.** The composition of Claim 7 wherein there is from about 10 to 60 parts per hundred parts of epoxy compound of said polyetheramine compound.

**10.** The composition of Claim 9 wherein x is 2, y is 0 and the polyepoxide compound is a diglycidyl ether of bisphenol A.